# EUROPÄISCHE PATENTSCHRIFT

(11) **EP 2 621 838 B1**
(45) Veröffentlichungstag und Bekanntmachung des Hinweises auf die Patenterteilung: **10.12.2014**
(21) Anmeldenummer: 12783876.1
(22) Anmeldetag: 15.10.2012
(51) Int. Cl.: B65G 23/08, B65G 39/12

(54) **ROLLENFÖRDERER MIT EINER DREHMOMENTENSTÜTZE**
ROLLER-WAY WITH TORQUE BRACKET
CONVOYEUR ÄÀ ROULEAUX AVEC SUPPORT DE COUPLE

(30) Priorität: 13.10.2011 DE 102011115865
(43) Veröffentlichungstag der Anmeldung: 07.08.2013
(73) Patentinhaber: Interroll Holding AG, 6592 Sant' Antonino (CH)
(72) Erfinder: HAGER, Dietmar, 42929 Wermelskirchen (DE)
(74) Vertreter: Müller-Boré & Partner Patentanwälte PartG mbB
(86) Internationale Anmeldenummer: PCT/EP2012/004305
(87) Internationale Veröffentlichungsnummer: WO 2013/053499

(56) Entgegenhaltungen:
- EP-A2- 1 285 869
- WO-A2-2011/029119
- US-B1- 6 799 676

## Beschreibung

### Gebiet der Erfindung

Die Erfindung betrifft einen Rollenförderer mit einer Drehmomentenstütze sowie ein Verfahren zum Befestigen einer Förderrolle in einer Rahmenstruktur mittels einer Drehmomentenstütze.

### Hintergrund der Erfindung und Stand der Technik

Rollenförderer mit Förderrollen dienen dem Fördern von Gütern. Um die Güter auf dem Rollenförderer zu befördern müssen die Güter zum Teil beschleunigt oder abgebremst werden. Hierzu existieren angetriebene oder gebremste Rollen, bei denen im Inneren der Rolle ein Drehmoment zur positiven oder negativen Beschleunigung der Drehgeschwindigkeit des Rollenmantels erzeugt wird. Dieses Drehmoment muss auf den Rahmen übertragen werden, in dem die Förderrollen montiert sind. Dabei wird das Drehmoment in der Regel über die Achse der Förderrolle auf den Rahmen übertragen.

Hierzu werden unterschiedliche Methoden verwandt. Zum Teil werden die Achsen der Förderrollen an dem Rahmen verschraubt, eingeklemmt oder mit mehr oder weniger komplizierten Mechanismen am Rahmen befestigt.

Die bekannten Mechanismen sind entweder aufwändig herzustellen und zu montieren und/oder bergen das Risiko, dass Schritte bei der Befestigung, wie das Anziehen von Schrauben, vergessen oder inkorrekt ausgeführt werden. Dabei kann die Förderrolle, im Fall einer angetriebenen Motorrolle insbesondere das Kabel, beschädigt werden, wenn sich die Achse verdreht.

Die Druckschrift EP 1 285 869 A2 offenbart eine Befestigungsstruktur mit einem feststehenden Körper; einem Schaft zum Anbringen an dem feststehenden Körper; einer Platte, welche an dem Schaft relativ zu dem Schaft nicht drehbar anbringbar und an dem feststehenden Körper befestigbar ist, wobei die Platte eine Durchgangsöffnung aufweist und der Schaft einen Eingriffsbereich aufweist, welcher in die Durchgangsöffnung einsetzbar ist, wobei die Durchgangsöffnung nicht kreisförmig und der Eingriffsbereich nicht kreisförmig im Querschnitt sind, um so die Rotation der Platte relativ zu dem Schaft zu verhindern, und einem Befestigungselement, welches an dem Schaft anbringbar ist, um den Schaft an dem feststehenden Körper zu befestigen, wobei der feststehende Körper ein Stahlprodukt ist, wobei die Platte Vorsprünge mit einer scharfen Spitze aufweist, welche mit einer Stahloberfläche des feststehenden Körpers in Eingriff bringbar sind, und wobei das Befestigungselement an dem Schaft anbringbar ist, um die scharfen Spitzen der Vorsprünge gegen die Stahloberfläche zu drücken, um die Rotation der Platte relativ zu dem starren Körper um die Achse des Schafts zu verhindern.

### Aufgabe

Es ist eine Aufgabe der Erfindung, einen Rollenförderer bereit zu stellen, bei dem die Förderrollen einfach zu montieren sind und bei dem eine hohe Ausfallsicherheit und ein geringer Wartungsaufwand gewährleistet sind. Ferner soll ein Verfahren zum Befestigen der Rolle bereit gestellt werden, welches diese Zielsetzung verfolgt.

### Lösung der Aufgabe

Die Aufgabe wird durch die Gegenstände der nebengeordneten Ansprüche gelöst. Vorteilhafte Ausführungsformen sind Gegenstände der Unteransprüche.

Ein erster Unabhängiger Aspekt zur Lösung der Aufgabe betrifft einen Rollenförderer mit einer Förderrolle, einer Rahmenstruktur und einer Drehmomentenstütze, wobei die Förderrolle zumindest ein Achselement und einen um das Achselement drehbar gelagerten Rollenmantel aufweist, wobei die Rahmenstruktur zumindest ein Achslager und zumindest eine Stützausnehmung aufweist, wobei die Drehmomentenstütze eine Achsausnehmung und zumindest einen Stützvorsprung aufweist, wobei das Achselement der Förderrolle in der Achsausnehmung der Drehmomentenstütze aufgenommen ist und das Achselement der Förderrolle und die Drehmomentenstütze verdrehsicher miteinander verbunden sind, wobei das zumindest eine Achselement in das Achslager der Rahmenstruktur eingesetzt ist und wobei die zumindest eine Stützausnehmung der Rahmenstruktur außermittig zur Rotationsachse des Rollenmantels der Förderrolle angeordnet ist und der zumindest eine Stützvorsprung der Drehmomentenstütze in die zumindest eine Stützausnehmung der Rahmenstruktur eingreift.

Die Rahmenstruktur kann z.B. zwei Rahmenprofile aufweisen, zwischen denen die Förderrolle angeordnet ist. Die Drehmomentenstütze dient der Abstützung eines am Achselement anliegenden Drehmoments an der Rahmenstruktur. Ein solches abzustützendes Drehmoment kann im Inneren der Rolle durch eine Bremse erzeugt werden. Alternativ kann die Förderrolle eine über einen im Inneren des Rollenmantels angeordneten Elektromotor angetriebene Motorrolle sein, so dass in diesem Fall das abzustützende Drehmoment ein Antriebsdrehmoment ist. Dabei kann ein elektrisches Kabel, das zur Versorgung des Elektromotors mit Strom dient, durch das zumindest eine Achselement nach außen geführt sein. Alternativ kann das elektrische Kabel durch ein zweites Achselement geführt sein, welches dem zumindest einen Achselement gegenüberliegend angeordnet ist. Bei diesen Gestaltungen kann die Drehmomentenstütze in einfacher Weise eine Verdrehung des Achselements gegenüber der Rahmenstruktur und somit eine Beschädigung des Kabels verhindern. In der Rahmenstruktur können eine Vielzahl von Förderrollen angeordnet sein. Denkbar ist, dass für jede Förderrolle ein oder auch mehrere Drehmomentenstützen vorgesehen sind. Da in der Regel nur einige der Förderrollen als Bremsrollen oder als angetriebene Motorrollen ausgebildet sind, können lediglich diese Brems- oder Motorrollen mit Drehmomentenstützen versehen sein. Die Drehmomentenstütze kann aus Kunststoff oder Metall, insbesondere Federstahl oder nichtrostendem Stahl hergestellt sein. Die Drehmomentenstütze kann als Blechbiegeteil, als Drahtbiegeteil, als Spritzgussteil oder in sonstiger Weise ausgebildet sein. Ein Drahtbiegeteil kann aus einem Stück Metalldraht gebogen sein. Der Metalldraht kann einen beliebigen, insbesondere einen runden Querschnitt aufweisen. Der Drahtdurchmesser kann etwa 3 mm betragen. Verdrehsicher bedeutet, dass über die Drehmomentenstütze ein Drehmoment, das 5 Nm oder 10 Nm, bei besonderen Ausführungsformen 15 Nm oder mehr beträgt, von dem Achselement auf die Rahmenstruktur übertragen und dort abgestützt werden kann, ohne dass es sich plastisch verformt. Dies gilt auch für die Ausführungsform bei der die Drehmomentenstütze als Blechbiegeteil ausgeführt ist. Das Achselement der Förderrolle kann durch eine Achsausnehmung der Drehmomentenstütze gesteckt werden, um die Drehmomentenstütze auf dem Achselement zu montieren. Die Drehmomentenstütze kann an der fertigen Förderrolle montiert werden. Dabei kann die Drehmomentenstütze einfach auf das Achselement aufgeschoben werden. Der Stützvorsprung kann einen gebogenen Abschnitt aufweisen. Dieser gebogene Abschnitt kann beim Einsetzen in die Stützausnehmung elastisch zusammengedrückt werden und am Ende des Einsetzvorgangs zurückfedern. Dabei kann der gebogene Abschnitt derart bemessen sein, dass zwei gegenüberliegende Bereiche des gebogenen Abschnitts im in die Stützausnehmung eingesetzten Zustand an gegenüberliegenden Randbereichen der Stützausnehmung elastisch vorgespannt anliegen. So kann ein spielfreier Sitz des Stützvorsprungs in der Stützausnehmung gewährleistet werden.

Eine Ausführungsform betrifft den vorstehend beschriebenen Rollenförderer, wobei sich das Achselement der Förderrolle durch die Achsausnehmung der Drehmomentenstütze hindurch erstreckt und die verdrehsichere Verbindung zwischen dem Achselement und der Drehmomentenstütze durch einen Formschluss zwischen dem Achselement der Förderrolle und der Achsausnehmung der Drehmomentenstütze in Umfangsrichtung um das Achselement bewirkt wird.

Dabei kann das Achselement der Förderrolle durch die Achsausnehmung der Drehmomentenstütze gesteckt werden, um die Drehmomentenstütze auf dem Achselement zu montieren. Die Drehmomentenstütze kann an der fertigen Förderrolle montiert werden. Dabei kann die Drehmomentenstütze einfach auf das Achselement aufgeschoben werden. Der Formschluss kann durch einen Innenquerschnitt der Drehmomentenstütze mit einem korrespondierenden Außenquerschnitt des Achselements erzeugt werden. Die korrespondierenden Querschnitte können rund und an einer Seite abgeflacht ausgebildet sein. Andere Gestaltungen können oval, dreieckig vier-, fünf- oder sechseckig oder keilwellenförmig sein oder andere von der reinen Kreisform abweichende Formen aufweisen. Die Drehmomentenstütze kann sich, ringförmig um den Achsbereich erstrecken, wobei der Ring geschlossen oder an einer Stelle geöffnet sein kann. Denkbar ist, dass ein Zwischenelement auf dem Achselement angeordnet ist, das über seinen Außenquerschnitt den Formschluss mit der Drehmomentenstütze erzeugt. Ein solches Zwischenelement kann z.B. eine Mutter sein, die auf das Achselement aufgeschraubt wird und auf dem Achselement über eine Schraubensicherung festgelegt wird. Der sechseckige Außenquerschnitt der Mutter kann mit dem Innenquerschnitt der Drehmomentenstütze korrespondieren.

Die Förderrolle mit einer derart vormontierten Drehmomentenstütze kann in die Rahmenstruktur eingesetzt werden. Dabei kann die Drehmomentenstütze in der Rahmenstruktur über eine Rastvorrichtung in der Rahmenstruktur einrasten. Auf diese Weise kann sicher gestellt werden, dass beim Einsetzen der Förderrolle das Achselement verdrehsicher mit der Rahmenstruktur verbunden werden kann, ohne dass ein weiterer Montageschritt erforderlich ist. Somit kann sicher gestellt werden, dass eine montierte Förderrolle immer verdrehsicher mit der Rahmenstruktur verbunden ist, ohne dass ein gesonderter Montageschritt, wie ein Verschrauben des Achselements an der Rahmenstruktur, erforderlich ist.

Eine weitere Ausführungsform betrifft einen der vorstehend beschriebenen Rollenförderer, wobei das Achselement einen sechskantigen Querschnittsbereich aufweist und wobei die Drehmomentenstütze als Drahtbiegeteil ausgebildet ist, wobei das Drahtbiegeteil einen mit dem sechskantigen Querschnitt korrespondierenden Formschlussbereich aufweist.

Der sechskantige Querschnittsbereich des Achselements kann durch eine Sechskantmutter bereitgestellt werden, die auf ein Außengewinde des Achselements aufgeschraubt ist und verdrehsicher mit dem Achselement verbunden ist. Alternativ kann ein einstückiges Achselement selber einen sechskantigen Querschnittsbereich aufweisen.

Eine weitere Ausführungsform betrifft einen der vorstehend beschriebenen Rollenförderer, wobei das Drahtbiegeteil drei gerade Abschnitte aufweist, die zueinander jeweils im Winkel von 60° stehen und die im montierten Zustand jeweils an einer Seitenfläche des sechskantigen Querschnittsbereichs anliegen.

In diesem Fall kann der sechskantige Querschnittsbereich des Achselements sechs Seitenflächen aufweisen, die wie bei einer Sechskantmutter radial außenseitig jeweils im Winkel von 240° zueinander stehen.

Ein zweiter unabhängiger Aspekt zur Lösung der Aufgabe betrifft einen Rollenförderer, wobei die drei geraden Abschnitte aus einem einzigen Drahtstück gebogen sind, wobei der mittlere gerade Abschnitt, der entlang des Verlaufs des Drahtstücks zwischen den beiden anderen seitlichen geraden Abschnitten liegt, mit den beiden anderen seitlichen geraden Abschnitten jeweils über einen kreissegmentförmigen Bogen des Drahtstücks verbunden ist.

Eine Ausführungsform betrifft den vorstehend beschriebenen Rollenförderer, wobei sich auf der dem mittleren geraden Abschnitt abgewandten Seite des jeweiligen seitlichen geraden Abschnitts, an jeden der seitlichen geraden Abschnitte ein Stützabschnitt anschließt.

Jedem der Stützabschnitte kann einen Stützvorsprung umfassen. Dabei können die Stützabschnitte jeweils einen geraden Schenkelabschnitt aufweisen, wobei sich die geraden Schenkelabschnitte entgegengesetzt voneinander erstrecken. Die Stützvorsprünge können am Ende der Schenkelabschnitte vorgesehen sein. Die drei gerade Abschnitte, die beiden Stützabschnitte und die Stützvorsprünge können einstückig aus einem Drahtbiegeteil hergestellt sein.

Dabei kann jeder der Stützabschnitte an seinem Ende im Anschluss an den geraden Schenkel in Achsrichtung des Achselements in Richtung der Rahmenstruktur umgebogen sein. Mit anderen Worten kann jeder der Stützabschnitte an seinem Ende aus einer Ebene heraus umgebogen sein, die durch die drei geraden Schenkel aufgespannt wird.

Eine weitere Ausführungsform betrifft einen der vorstehend beschriebenen Rollenförderer, wobei die Rahmenstruktur ein Rahmenprofil umfasst und wobei die Stützausnehmungen durch zwei Ausnehmungen in dem Rahmenprofil gebildet werden.

Das Rahmenprofil kann als Gussprofil, Stranggussprofil oder als Blechprofil ausgebildet sein. Die Stützausnehmungen können z.B. durch zwei Langlöcher pro Drehmomentenstütze gebildet werden. So können die Stützabschnitte in die Stützausnehmungen in dem Rahmenprofil eingreifen, so dass ein Drehmoment, das an dem Achselement anliegt, über die Drehmomentenstütze in den Rahmen eingeleitet werden und an diesem abgestützt werden kann. Auf diese Weise kann gleichzeitig eine Lagesicherung der Förderrolle quer zur Achsrichtung des Achselements bewirkt werden, was z.B. bei nach oben offenen Lagerstellen vorteilhaft sein kann.

Eine weitere Ausführungsform betrifft einen der vorstehend beschriebenen Rollenförderer, wobei sich das Achselement der Förderrolle durch die Achsausnehmung der Drehmomentenstütze hindurch erstreckt und die verdrehsichere Verbindung zwischen dem Achselement und der Drehmomentenstütze durch einen Kraftschluss bewirkt wird.

Ein solcher Kraftschluss kann z.B. dadurch bewirkt werden, dass die Drehmomentenstütze auf dem Achselement verschraubt wird. Für eine solche Verschraubung kann z.B. das Achselement ein Außengewinde aufweisen auf das zwei Muttern aufgeschraubt werden können, zwischen denen die Drehmomentenstütze eingespannt wird. Die Drehmomentenstütze braucht zu diesem Zweck selber kein Innengewinde aufweisen. Alternativ kann die Drehmomentenstütze zwischen einem Absatz auf dem Achselement und einer Mutter eingespannt werden oder in anderer Weise, wie z.B. mit Sprengringen. Andere Konstruktionen sind ebenfalls denkbar. Auch bei dieser Ausführungsform kann zur Montage das Achselement der Förderrolle durch die Achsausnehmung der Drehmomentenstütze gesteckt werden. Zusätzlich zur Verschraubung kann ein Formschluss zwischen dem Achselement der Förderrolle und der Achsausnehmung der Drehmomentenstütze vorgesehen sein, der den Kraftschluss der Verschraubung ergänzt. Insofern geltend die vorstehenden Ausführungen in Bezug auf den Formschluss und die Gestaltung des Formschluss entsprechend.

Eine weitere Ausführungsform betrifft einen der vorstehend beschriebenen Rollenförderer, wobei die Drehmomentenstütze als Blechbiegeteil ausgebildet ist.

Ein solches Blechbiegeteil kann zwischen zwei Muttern, zwischen einem Absatz auf dem Achselement und einer Mutter eingespannt werden. Alternativ kann das Blechbiegeteil z.B. mit einem oder mehreren Sprengringen auf dem Achselement festgelegt werden. Zusätzlich oder alternativ kann eine als Blechbiegeteil ausgebildete Drehmomentenstütze über einen Formschluss verdrehsicher mit dem Achselement verbunden sein. Die vorstehenden Ausführungen zu Form- und Kraftschluss gelten entsprechend.

Eine weitere Ausführungsform betrifft einen der vorstehend beschriebenen Rollenförderer, wobei die Stützvorsprünge mittels einer elastischen Rastverbindung in den Stützausnehmungen gehalten werden.

Die Stützvorsprünge können elastisch federnd ausgebildet sein. Dazu kann bei einem Drahtbiegeteil jeder Stützvorsprung aus einem umgebogenen Drahtabschnitt gebildet sein, der an seiner dicksten Stelle etwas breiter ist als die korrespondierende lichte Weite der Stützausnehmung. Entsprechend kann bei einem Blechbiegeteil jeder Stützvorsprung aus einem umgebogenen Blechabschnitt gebildet sein, der an seiner dicksten Stelle etwas breiter ist als die korrespondierende lichte Weite der Stützausnehmung. In beiden Fällen kann der Stützvorsprung an dieser breitesten Stelle beim Einsetzen in die Stützausnehmung komprimiert werden und am Ende des Einsetzvorgangs elastisch zurückfedern, so dass der Stützvorsprung in der Stützausnehmung gehalten wird. Die Rastverbindung kann eine Rastvorrichtung am Stützvorsprung aufweisen. Dabei kann die Rastvorrichtung als ein gebogener Abschnitt am Stützvorsprung ausgebildet sein. Dieser gebogene Abschnitt kann beim Einsetzen in die Stützausnehmung elastisch zusammengedrückt werden und am Ende des Einsetzvorgangs zurückfedern und die Stützausnehmung hintergreifen. Dabei kann der gebogene Abschnitt derart bemessen sein, dass zwei gegenüberliegende Bereiche des gebogenen Abschnitts im in die Stützausnehmung eingesetzten Zustand an gegenüberliegenden Randbereichen der Stützausnehmung elastisch vorgespannt anliegen. So kann ein spielfreier Sitz des Stützvorsprungs in der Stützausnehmung gewährleistet werden.

Eine weitere Ausführungsform betrifft einen der vorstehend beschriebenen Rollenförderer, wobei die Drehmomentenstütze auf der der Förderrolle zugewandten Innenseite der Rahmenstruktur angeordnet ist.

Diese Gestaltung erleichtert das Einsetzen der Förderrolle mit der Drehmomentenstütze. Insbesondere kann so die Förderrolle mit der Drehmomentenstütze vormontiert sein. Beim Einsetzen der Förderrolle in die Rahmenstruktur kann das Achselement in das Achslager der Rahmenstruktur eingesetzt werden, wobei gleichzeitig der oder die Stützvorsprünge der Drehmomentenstütze mit den korrespondierende(n) Stützausnehmung(en) in Eingriff kommen und dort einrasten können.

Eine weitere Ausführungsform betrifft einen der vorstehend beschriebenen Rollenförderer, wobei die Drehmomentenstütze, das Achselement und die Rahmenstruktur derart zusammenwirken, dass das Achselement der Förderrolle durch die Drehmomentenstütze relativ zur Rahmenstruktur in radialer und/oder axialer Richtung fixiert wird.

Die Angabe in radialer Richtung bezieht sich auf das Achselement bzw. die Rotationsachse der Förderrolle. So kann ein Achselement im Achslager fixiert werden, auch wenn das Achselement nicht umfänglich in allen Richtungen vom Achslager spielfrei umgeben ist. So kann auch eine Ausführungsform verwirklicht werden, bei dem das Achslager in seitlicher Richtung breiter als das Achselement ist und/oder eine Ausführungsform bei der das Achslager nach oben offen ist. Bei solchen Ausführungsformen kann das Achselement leicht in das Achslager eingelegt oder eingeschwenkt werden. In diesem Fall kann das Achselement durch die Drehmomentenstütze nicht nur an einer Verdrehung gehindert werden sondern zusätzlich in dem Achslager gegen ein Herausrutschen in radialer Richtung, insbesondere seitlicher Richtung oder nach oben, fixiert werden.

Die Angabe in axialer Richtung bezieht sich auf das Achselement bzw. die Rotationsachse der Förderrolle. Bei dieser Ausführungsform kann das Achselement durch die Drehmomentenstütze nicht nur an einer Verdrehung gehindert werden sondern zusätzlich in dem Achslager fixiert werden, so dass ein seitliches Verrutschen der Förderrolle verhindert wird. Dabei kann die Drehmomentenstütze so gestaltet sein, dass ein Verrutschen in eine Richtung oder in beide Richtungen verhindert wird. Eine solche axiale Fixierung kann durch ein Verrasten der Drehmomentenstütze an der Rahmenstruktur bewirkt werden, z.B. mittels einer Rastvorrichtung, die als Rastnase an dem Stützvorsprung der Drehmomentenstütze ausgebildet sein kann. Eine solche Rastnase kann in der Stützausnehmung der Rahmenstruktur einrasten und so das Achselement an einem Herausrutschen aus dem Achslager in axialer Richtung hindern.

Denkbar ist eine Ausführungsform bei der eine axiale und eine radiale Fixierung bewirkt wird. Ebenso kann bei einer anderen Ausführungsform lediglich eine Fixierung in radialer Richtung oder bei noch einer anderen Ausführungsform nur eine Fixierung in axialer Richtung gegeben sein.

Eine Fixierung des Achselements im Achslager durch die Drehmomentenstütze kann in radialer und/oder axialer Richtung spielfrei erfolgen. Eine Fixierung des Achselements im Achslager durch die Drehmomentenstütze kann derart erfolgen, dass sich die Position des Achselements im Achslager in axialer und insbesondere in radialer Richtung auch bei einem Anliegen eines Drehmoments nicht verändert. Dazu kann das Material und die Abmessungen der Drehmomentenstütze in Bezug auf das maximale von der Förderrolle zu erzeugende Drehmoment derart bemessen sein, dass eine spielfreie Fixierung des Achselements im Achslager über den gesamten Drehmomentenbereich gewährleistet ist.

Eine weitere Ausführungsform eines der vorstehend beschriebenen Rollenförderer betrifft einen Rollenförderer, wobei das Achselement mit der Rahmenstruktur über die Drehmomentenstütze derart verbunden ist, dass das Achselement im Achslager in Richtung der Schwerkraft elastisch vorgespannt anliegt.

Durch diese Gestaltung kann der Geräuschpegel im Betrieb des Rollenförderers reduziert werden, weil durch die elastische Vorspannung die Achselemente in die Achslager gedrückt werden und so eine Relativbewegung der Achselemente in den Achslagern reduziert oder verhindert wird. Durch diese Gestaltung kann das Achselement spielfrei im Achslager gehalten werden.

Ein zweiter unabhängiger Aspekt zur Lösung der Aufgabe betrifft ein Verfahren zum Befestigen einer Förderrolle in einer Rahmenstruktur eines Rollenförderers umfassend die folgenden Schritte
- Bereitstellen einer Förderrolle mit zumindest einem Achselement und einem um das Achselement drehbar gelagerten Rollenmantel,
- Bereitstellen einer Rahmenstruktur mit zumindest einem Achslager und mit zumindest einer Stützausnehmung,
- Bereitstellen einer getrennt von Förderrolle und Rahmenstruktur ausgebildeten Drehmomentenstütze mit zumindest einem Stützvorsprung,
- verdrehsicheres Befestigen der Drehmomentenstütze an dem Achselement der Förderrolle,
- Einsetzen des Achselements der Förderrolle in das Achslager der Rahmenstruktur und
- Ineingriffbringen des Stützvorsprungs der Drehmomentenstütze mit der Stützausnehmung der Rahmenstruktur.

Eine weitere Ausführungsform des Verfahrens betrifft ein Verfahren, wobei das verdrehsichere Befestigen der Drehmomentenstütze vor dem Einsetzen des Achselements der Förderrolle in das Achslager der Rahmenstruktur erfolgt und wobei das Ineingriffbringen des Stützvorsprungs der Drehmomentenstütze mit der Stützausnehmung der Rahmenstruktur gleichzeitig mit dem Einsetzen des Achselements der Förderrolle in das Achslager der Rahmenstruktur erfolgt.

Weitere Schritte und Reihenfolgen der Schritt der vorgenannten Verfahren ergeben sich aus den vorstehenden Ausführungen zum ersten Aspekt, sowie aus der nachfolgenden Figurenbeschreibung.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereit stellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden um unnötige Wiederholungen zu vermeiden bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann, und daher in Erwägung gezogen und auch als von der Beschreibung umfasst angesehen werden soll.
- Figur 1a: zeigt eine erste Ausführungsform eines Rollenförderers in einer Seitenansicht.
- Figur 1b: zeigt die Ausführungsform des Rollenförderers aus Figur 1a in einer Ansicht von oben.
- Figur 2: zeigt eine geschnittene Teilansicht des Rollenförderers aus Figur 1 a.
- Figur 3: zeigt eine weitere geschnittene Teilansicht des Rollenförderers in einer anderen Schnittebene.
- Figuren 4a - 4c: zeigen verschiedene Ansichten einer Drehmomentenstütze.
- Figuren 5a - 5c: zeigen verschiedene Ansichten einer Drehmomentenstütze, die Bestandteil der in den Figuren 1 bis 3 gezeigten Ausführungsform ist.

### Detaillierte Beschreibung der Zeichnung

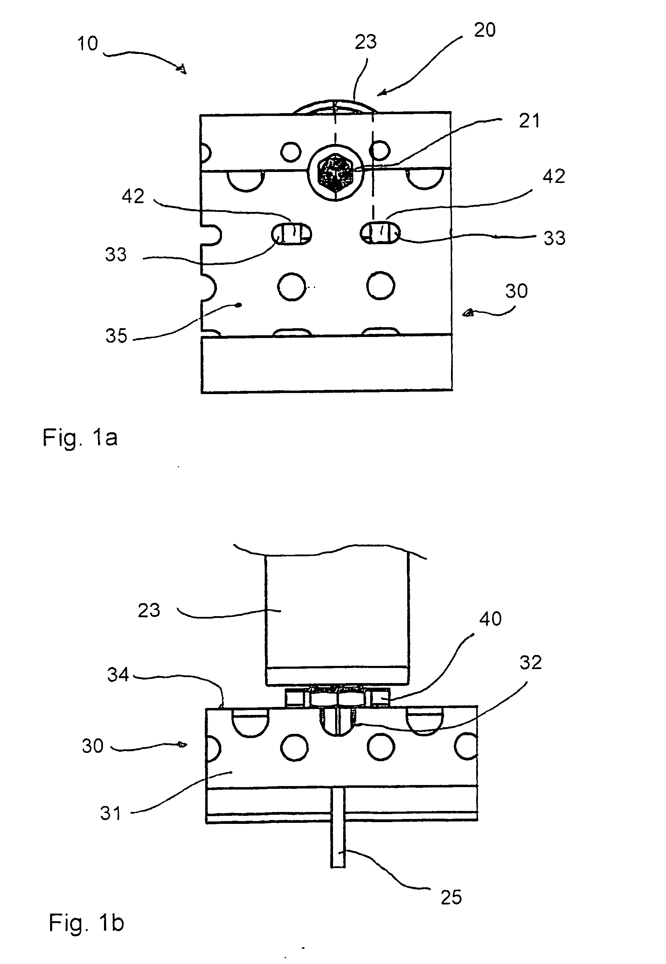

**Figuren 1a und 1b** zeigen eine erste Ausführungsform eines Rollenförderers 10 in einer Seitenansicht und in einer Ansicht von oben.

Der Rollenförderer 10 weist eine Rahmenstruktur 30, eine Förderrolle 20 und eine Drehmomentenstütze 40 auf. Die Förderrolle 20 umfasst einen Achselement 21, um das ein Rollenmantel 23 drehbar gelagert ist. Das Achselement 21 ist in einem Achslager 32 des Rahmenprofils 31 aufgenommen. Dabei ist das Achslager 32 als längliche, nach oben offene Ausnehmung im Rahmenprofils 31 ausgebildet, so dass das Achselement von oben in das Achslager eingelegt werden kann.

In der dargestellten Ausführungsform ist das Achselement 21 innen hohl ausgebildet, so dass in axialer Richtung Raum für ein elektrisches Kabel 25 vorgesehen ist, dass in Figur 1b erkennbar ist, und sich durch das Achselement 21 ins Innere der Förderrolle 20 erstreckt.

Die Drehmomentenstütze 40 ist bei dieser Ausführungsform zwischen der Förderrolle 20 und dem Rahmenprofil 31 vorgesehen. Die Drehmomentenstütze 40 ist verdrehsicher mit dem Achselement 21 verbunden, wie unten in Bezug auf die folgenden Figuren noch im Detail beschrieben wird. Damit ein Drehmoment an der Rahmenstruktur 30 abgestützt werden kann, weist die Drehmomentenstütze 40 zwei Stützvorsprünge 42 auf, die in korrespondierende Stützausnehmungen 33 im Rahmenprofil 31 eingreifen.

In Figur 1 a ist eine Seitenansicht dargestellt, in der die Blickrichtung auf eine Außenseite 35 der Rahmenstruktur gerichtet ist und in der die Stützausnehmungen 33 erkennbar sind, in die die Stützvorsprünge 42 eingreifen. Wie dargestellt, sind die Stützausnehmungen 33 als Langlöcher ausgebildet, die außermittig im Verhältnis zur Förderrolle 20 beziehungsweise zu deren Achselement 21 angeordnet sind. Die Form der Stützausnehmungen 33 ist lediglich beispielhaft dargestellt. Andere Formen sind ebenfalls denkbar.

Durch die Anordnung der Drehmomentenstütze 40 auf der Innenseite 34 der Rahmenstruktur kann die dargestellte Förderrolle 20 einfach montiert werden, indem das Achselement 21 in das Achslager 32 eingesetzt wird und gleichzeitig die Stützvorsprünge 42 in die Stützausnehmungen 33 eingreifen und dort einrasten.

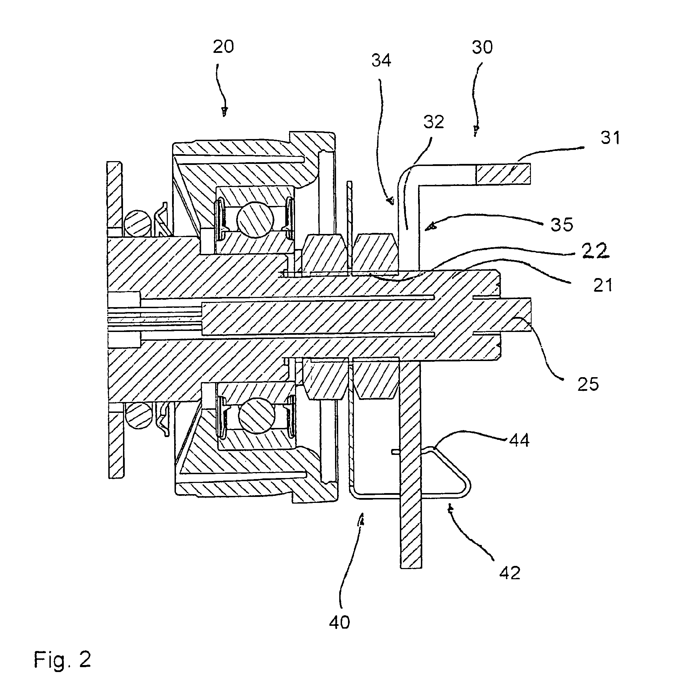

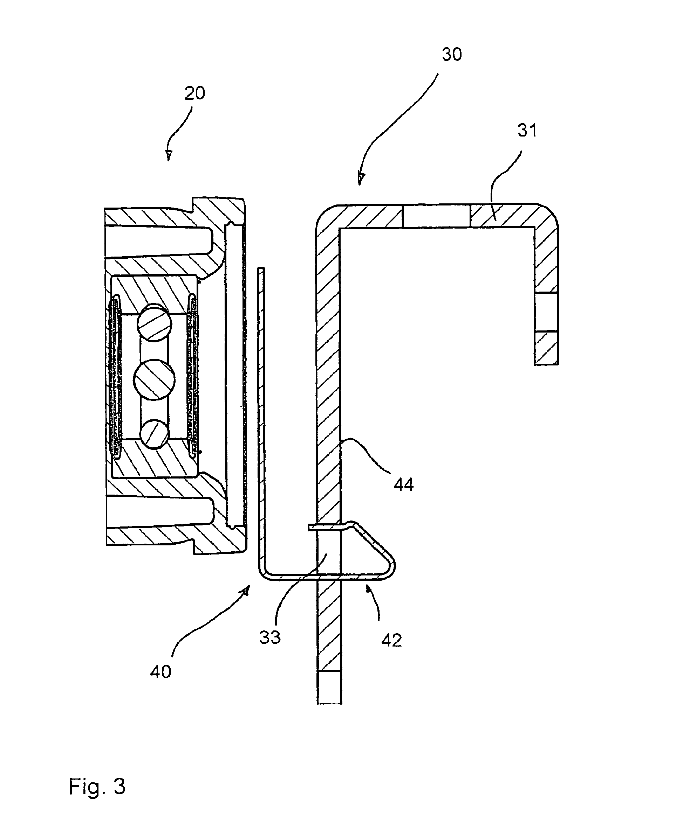

Figur 2 zeigt eine geschnittene Teilansicht des Rollenförderers 10 aus Figur 1 a und Figur 3 zeigt eine weitere geschnittene Teilansicht des gleichen Rollenförderers 10 aus derselben Richtung in einer anderen Schnittebene, die in Blickrichtung vor der Schnittebene liegt, die in Figur 2 dargestellt ist. Einige Bauteile, die in Figur 2 dargestellt sind, sind in Figur 3 nicht gezeigt, um die Drehmomentenstütze 40 besser erkennen zu können.

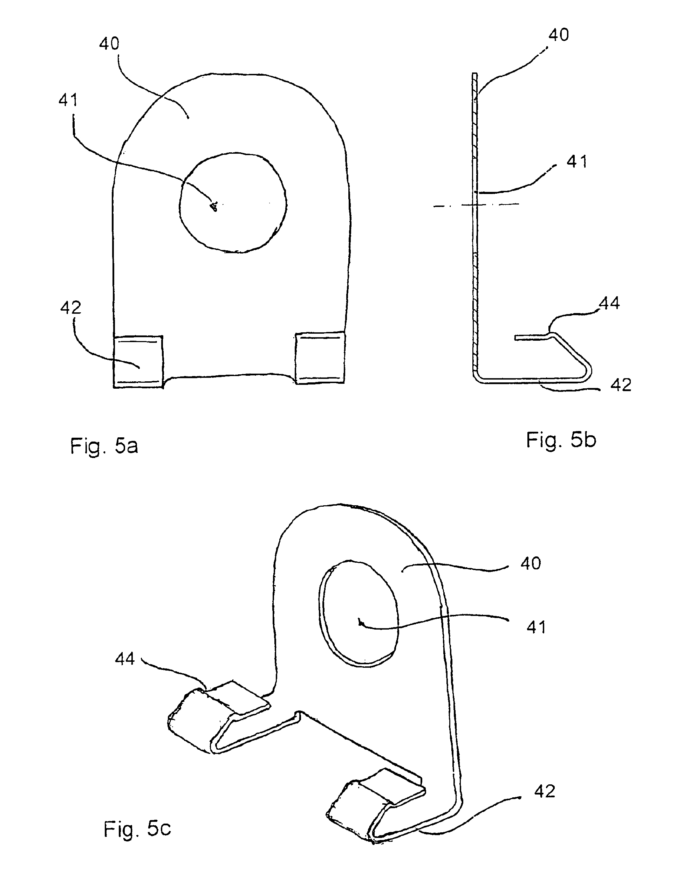

Die bei dieser Ausführungsform verwendete Drehmomentenstütze 40 ist in verschiedenen Ansichten in den **Figuren 5a bis 5c** dargestellt.

Wie in den genannten Figuren dargestellt ist, ist die Drehmomentenstütze 40 bei dieser Ausführungsform als Blechbiegeteil ausgeführt. Die Drehmomentenstütze 40 weist eine Achsausnehmung 41 auf, die in der dargestellten Ausführungsform kreisrund ausgebildet ist, und durch die das Achselement 21 der Förderrolle gesteckt werden kann. Alternativ könnte die Achsausnehmung 41 an einer Seite des kreisförmigen Randes und das Achselement 21 in einem korrespondierenden Bereich der Oberfläche abgeflacht sein, so dass ein Formschluss zwischen dem Achselement 21 und der Drehmomentenstütze 40 bereitgestellt wird. Andere Formen zur Herstellung eines Formschlusses sind ebenfalls denkbar.

Das Achselement 21 weist ein Außengewinde 22 auf, auf welches zwei Muttern aufgeschraubt sind. Zwischen den beiden Muttern ist die Drehmomentenstütze eingespannt. Durch ein Anziehen der beiden Muttern gegeneinander wird die Drehmomentenstütze 40 verdrehsicher auf dem Achselement 21 festgelegt. Dabei kann die Position der Drehmomentenstütze in axialer Richtung durch ein Positionieren der beiden Muttern vor dem Festziehen justiert werden. Auch im oben erwähnten Fall, bei dem zwischen Achselement 21 und Drehmomentenstütze 40 ein Formschluss vorgesehen ist, kann die Drehmomentenstütze 40 mittels einer oder zwei Schrauben in axialer Richtung fixiert oder fest eingespannt werden. Alternativ, kann die Drehmomentenstütze 40 in diesem Fall auf andere Art in axialer Richtung fixiert werden, wie z.B. durch Sprengringe.

In der dargestellten Ausführungsform, kommt die in Bezug auf die Förderrolle 20 außen liegende Mutter in Kontakt mit der Innenseite 34 der Rahmenstruktur, wenn die Förderrolle 20 in die Rahmenstruktur eingesetzt ist. Die Stützvorsprünge 42 greifen in diesem Zustand in die Stützausnehmungen 33 des Rahmenprofils 31 ein und fixieren die Förderrolle 20 in axialer Richtung, so dass die Förderrolle 20 in axialer Richtung in einer definierten Position festgelegt ist, ohne dass weitere Montageschritte erforderlich wären.

Die Drehmomentenstütze ist in dieser Ausführungsform einstückig aus Federblech hergestellt. Alternativ kann ein nichtrostender Stahl oder ein anderes Material zum Einsatz kommen.

Die Drehmomentenstütze 40 weist einen flachen Bereich auf in dem Achsausnehmung 41 vorgesehen ist. Die Stützvorsprünge 42 erstrecken sich im Wesentlichen senkrecht zu diesem Bereich in einer Richtung parallel zum Achselement oder parallel zur Rotationsache der Förderrolle. Am Ende der Stützvorsprünge 42 ist ein umgebogener Bereich ausgebildet, der zunächst eine Schräge aufweist, die ein Einführen in die Stützausnehmung erleichtert. Der umgebogene Bereich lässt sich beim Einführen in die Stützausnehmung elastisch etwas zusammendrücken und federt am Ende des Einführwegs zurück in Richtung seiner ursprünglichen unverformten Position. Dabei liegen die beiden sich gegenüberliegenden Schenkel des umgebogenen Bereichs an korrespondierenden gegenüberliegenden Randbereichen der Stützausnehmung 33 an, so dass die Stützvorsprünge 42 vorgespannt und spielfrei in den Stützausnehmungen aufgenommen sind.

Die Rastvorrichtungen 44, die an den Stützvorsprüngen 42 vorgesehen sind, sind werkzeuglos lösbar ausgestaltet. Bei anderen Ausführungsformen kann die Verrastung derart erfolgen, dass die Rastvorrichtung 44 das Rahmenprofil 31 hakenartig hintergreift, so dass ein Verrutschen der Förderrolle 20 in axialer Richtung sicher ausgeschlossen ist und ggf. ein Werkzeug zum Lösen der Verbindung benötigt wird.

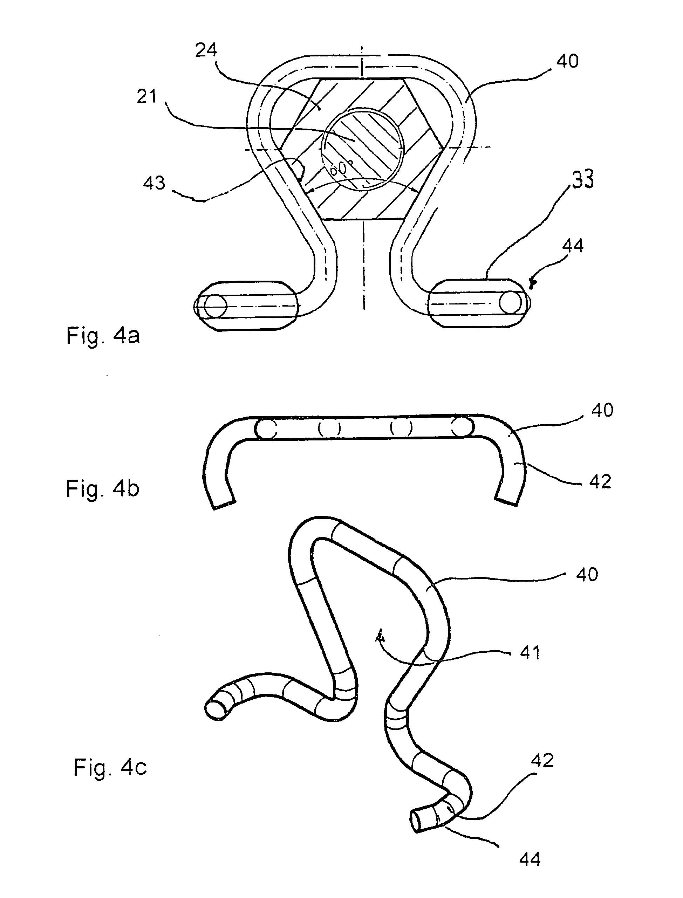

Figuren 4a - 4c zeigen verschiedene Ansichten einer weiteren Ausführungsform einer Drehmomentenstütze 40. bei dieser Ausführungsform ist die Drehmomentenstütze 40 als Drahtbiegeteil aus Federdraht hergestellt. Die Drehmomentenstütze 40 ist durch einen Formschluss in Umfangsrichtung drehfest auf einem Zwischenelement 24 festgelegt. Zu diesem Zweck ist das Zwischenelement 24 als Sechskantmutter ausgeführt.

Das Zwischenelement 24 kann über eine in den Figuren nicht dargestellte Schraubensicherung mit dem Achselement 21 verbunden sein. Ein Schraubensicherung kann durch eine chemische oder mechanische Schraubensicherung, insbesondere kraftschlüssige oder formschlüssige Schraubensicherung, bereitgestellt werden.

Alternativ kann das Achselement 21 selber in einem Bereich entlang seiner Längserstreckung einem korrespondierenden sechskantigen Querschnitt aufweisen, so dass kein Zwischenelement 24 erforderlich wäre.

In der dargestellten Ausführungsform ist das Achselement 21 ohne Durchgangsloch für ein elektrisches Kabel dargestellt. Bei dieser Ausführungsform kann es sich bei der Förderrolle 20 um eine gebremste Förderrolle 20 handeln bei der eine Bremse im Inneren des Rollenmantels 23 angeordnet ist. Eine Bremse, wie z.B. eine Fliehkraftbremse benötigt keine Elektrizität, so dass hier kein elektrisches Kabel vorgesehen werden muss. Alternativ kann bei einer angetriebenen Förderrolle das elektrische Kabel auch auf der Rollenseite vorgesehen sein, die dem dargestellten Achselement 21 mit Drehmomentenstütze 40 gegenüberliegt.

Die als Drahtbiegeteil ausgeführte Drehmomentenstütze 40 weist drei gerade Abschnitte auf, die jeweils im Winkel von 60° zueinander stehen. Dabei erstrecken sich von beiden Seiten eines mittleren geraden Abschnitts jeweils ein weiterer seitlicher gerader Abschnitt. An die seitlichem geraden Abschnitte schließen sich jeweils Stützabschnitte in seitlicher Richtung an. An den Stützabschnitten befindet sich jeweils ein Stützvorsprung 42. In der dargestellten Ausführungsform ist das gesamte Drahtbiegeteil aus einem fortlaufenden Drahtstück gebogen. Dabei umgeben die drei geraden Abschnitte des Zwischenelement 24 wie ein einseitig offener Ring. Die drei geraden Abschnitte liegen jeweils an einer Seite der Sechskantmutter an, so dass die Drehmomentenstütze 40 in Umfangsrichtung über einen Formschluss auf dem Achselement 21 festgelegt ist.

Wie in Figur 4a dargestellt, sind die Stützvorsprünge 42 jeweils mit einer Rastvorrichtung 44 versehen. Dabei lassen sich die Stützvorsprünge 42 elastisch zusammen drücken. Im zusammengedrückten Zustand weisen die Rastvorrichtungen 44 einen kleineren Abstand auf als die lichte Weite der korrespondierenden Stützausnehmungen 33. Auch bei dieser Ausführungsform kann die Förderrolle 20 zusammen mit der auf dem Achselement 21 angeordneten Drehmomentenstütze 40 werkzeuglos in das Rahmenprofil 31 eingesetzt werden. Beim Einsetzen werden die Stützvorsprünge 42 mit den daran angeordneten Rastvorrichtungen 44 etwas zusammen gedrückt, dringen in die korrespondierenden Stützausnehmungen 33 ein und dehnen sich auf der Außenseite 35 der Rahmenstruktur wieder aus, so dass die Drehmomentenstütze 40 in der Rahmenstruktur 30 spielfrei einrastet.

### Bezugszeichenliste

- 10: Rollenförderer

- 20: Förderrolle
- 21: Achselement
- 22: Außengewinde des Achselements
- 23: Rollenmantel
- 24: Zwischenelement
- 25: elektrisches Kabel

- 30: Rahmenstruktur
- 31: Rahmenprofil
- 32: Achslager
- 33: Stützausnehmung
- 34: Innenseite der Rahmenstruktur
- 35: Außenseite der Rahmenstruktur

- 40: Drehmomentenstütze
- 41: Achsausnehmung
- 42: Stützvorsprung
- 43: Formschlussbereich
- 44: Rastvorrichtung

## Patentansprüche

1. Rollenförderer (10) mit einer Förderrolle (20), einer Rahmenstruktur (30) und einer Drehmomentenstütze (40),
wobei die Förderrolle (20) zumindest ein Achselement (21) und einen um das Achselement (21) drehbar gelagerten Rollenmantel (23) aufweist, wobei die Rahmenstruktur (30) zumindest ein Achslager (32) und zumindest eine Stützausnehmung (33) aufweist,
wobei die Drehmomentenstütze (40) eine Achsausnehmung (41) und zumindest einen Stützvorsprung (42) aufweist,
wobei das Achselement (21) der Förderrolle (20) in der Achsausnehmung (41) der Drehmomentenstütze (40) aufgenommen ist und das Achselement (21) der Förderrolle (20) und die Drehmomentenstütze (40) verdrehsicher miteinander verbunden sind,
wobei das zumindest eine Achselement (21) in das Achslager (32) der Rahmenstruktur (30) eingesetzt ist und
wobei die zumindest eine Stützausnehmung (33) der Rahmenstruktur (30) außermittig zur Rotationsachse des Rollenmantels (23) der Förderrolle (20) angeordnet ist und der zumindest eine Stützvorsprung (42) der Drehmomentenstütze (40) in die zumindest eine Stützausnehmung (33) der Rahmenstruktur (30) eingreift.

2. Rollenförderer (10) nach Anspruch 1, wobei sich das Achselement (21) der Förderrolle (20) durch die Achsausnehmung (41) der Drehmomentenstütze (40) hindurch erstreckt und die verdrehsichere Verbindung zwischen dem Achselement (21) und der Drehmomentenstütze (40) durch einen Formschluss zwischen dem Achselement (21) der Förderrolle (20) und der Achsausnehmung (41) der Drehmomentenstütze (40) in Umfangsrichtung um das Achselement (21) bewirkt wird.

3. Rollenförderer (10) nach einem der Ansprüche 1 oder 2, wobei das Achselement (21) einen sechskantigen Querschnittsbereich aufweist und wobei die Drehmomentenstütze (40) als Drahtbiegeteil ausgebildet ist, wobei das Drahtbiegeteil einen mit dem sechskantigen Querschnitt korrespondierenden Formschlussbereich (43) aufweist.

4. Rollenförderer (10) nach Anspruch 3, wobei das Drahtbiegeteil drei gerade Abschnitte aufweist, die zueinander jeweils im Winkel von 60° stehen und die im montierten Zustand jeweils an einer Seitenfläche des sechskantigen Querschnittsbereichs anliegen.

5. Rollenförderer (10) nach Anspruch 4, wobei die drei geraden Abschnitte aus einem einzigen Drahtstück gebogen sind, wobei der mittlere gerade Abschnitt, der entlang des Verlaufs des Drahtstücks zwischen den beiden anderen seitlichen geraden Abschnitten liegt, mit den beiden anderen seitlichen geraden Abschnitten jeweils über einen kreissegmentförmigen Bogen des Drahtstücks verbunden ist.

6. Rollenförderer (10) nach Anspruch 5, wobei sich auf der dem mittleren geraden Abschnitt abgewandten Seite des jeweiligen seitlichen geraden Abschnitts, an jeden der seitlichen geraden Abschnitte ein Stützabschnitt anschließt.

7. Rollenförderer (10) nach einem der vorstehenden Ansprüche, wobei die Rahmenstruktur (30) ein Rahmenprofil (31) umfasst und wobei die Stützausnehmungen (33) durch zwei Ausnehmungen in dem Rahmenprofil (31) gebildet werden.

8. Rollenförderer (10) nach einem der vorstehenden Ansprüche, wobei sich das Achselement (21) der Förderrolle (20) durch die Achsausnehmung (41) der Drehmomentenstütze (40) hindurch erstreckt und die verdrehsichere Verbindung zwischen dem Achselement (21) und der Drehmomentenstütze (40) durch einen Kraftschluss bewirkt wird.

9. Rollenförderer (10) nach einem der vorstehenden Ansprüche, wobei die Stützvorsprünge mittels einer elastischen Rastverbindung in den Stützausnehmungen (33) gehalten werden.

10. Rollenförderer (10) nach einem der vorstehenden Ansprüche, wobei die Drehmomentenstütze (40) auf der der Förderrolle (20) zugewandten Innenseite (34) der Rahmenstruktur (30) angeordnet ist.

11. Rollenförderer (10) nach einem der vorstehenden Ansprüche, wobei die Drehmomentenstütze (40), das Achselement (21) und die Rahmenstruktur (30) derart zusammenwirken, dass das Achselement (21) der Förderrolle (20) durch die Drehmomentenstütze (40) relativ zur Rahmenstruktur (30) in radialer und/oder axialer Richtung fixiert wird.

12. Rollenförderer (10) nach einem der vorstehenden Ansprüche, wobei das Achselement (21) mit der Rahmenstruktur (30) über die Drehmomentenstütze (40) derart verbunden ist, dass das Achselement (21) im Achslager in Richtung der Schwerkraft elastisch vorgespannt anliegt.

13. Verfahren zum Befestigen einer Förderrolle (20) in einer Rahmenstruktur (30) eines Rollenförderers (10) umfassend die folgenden Schritte:
- Bereitstellen einer Förderrolle (20) mit zumindest einem Achselement (21) und einem um das Achselement (21) drehbar gelagerten Rollenmantel (23),
- Bereitstellen einer Rahmenstruktur (30) mit zumindest einem Achslager (32) und mit zumindest einer Stützausnehmung (33),
- Bereitstellen einer getrennt von Förderrolle (20) und Rahmenstruktur (30) ausgebildeten Drehmomentenstütze (40) mit zumindest einem Stützvorsprung (42),
- verdrehsicheres Befestigen der Drehmomentenstütze (40) an dem Achselement (21) der Förderrolle (20),
- Einsetzen des Achselements (21) der Förderrolle (20) in das Achslager (32) der Rahmenstruktur (30) und
- Ineingriffbringen des Stützvorsprungs (42) der Drehmomentenstütze (40) mit der Stützausnehmung (33) der Rahmenstruktur (30).

14. Verfahren zum Befestigen einer Förderrolle (20) nach Anspruch 13, wobei das verdrehsichere Befestigen der Drehmomentenstütze (40) vor dem Einsetzen des Achselements (21) der Förderrolle (20) in das Achslager (32) der Rahmenstruktur (30) erfolgt und wobei das Ineingriffbringen des Stützvorsprungs (42) der Drehmomentenstütze (40) mit der Stützausnehmung (33) der Rahmenstruktur (30) gleichzeitig mit dem Einsetzen des Achselements (21) der Förderrolle (20) in das Achslager (32) der Rahmenstruktur (30) erfolgt.

## Claims

1. A roller conveyor (10) with a conveyor roller (20), a frame structure (30), and a torque support (40),
wherein the conveyor roller (20) has at least one axle element (21) and a roller casing (23) rotatably supported around the axle element (21),
wherein the frame structure (30) has at least one axle bearing (32) and at least one support recess (33),
wherein the torque support (40) has an axle recess (41) and at least one support projection (42),
wherein the axle element (21) of the conveyor roller (20) is received in the axle recess (41) of the torque support (40), and the axle element (21) of the conveyor roller (20) and the torque support (40) are connected to each other in a torsion-proof manner,
wherein the at least one axle element (21) is inserted in the axle bearing (32) of the frame structure (30), and
wherein the at least one support recess (33) of the frame structure (30) is arranged off-center with respect to the axis of rotation of the roller casing (23) of the conveyor roller (20), and the at least one support projection (42) of the torque support (40) engages the at least one support recess (33) of the frame structure (30).

2. The roller conveyor (10) according to claim 1, wherein the axle element (21) of the conveyor roller (20) extends through the axle recess (41) of the torque support (40) and the torsion-proof connection between the axle element (21) and the torque support (40) is caused by positive locking between the axle element (21) of the conveyor roller (20) and the axle recess (41) of the torque support (40) in the circumferential direction around the axle element (21).

3. The roller conveyor (10) according to one of claims 1 or 2, wherein the axle element (21) has a hexagonal cross-sectional area, and wherein the torque support (40) is formed as a bent wire part, wherein the bent wire part has a positive locking region (43) corresponding to the hexagonal cross section.

4. The roller conveyor (10) according to claim 3, wherein the bent wire part has three straight portions at an angle of 60° with respect to each other, which in the mounted state bear against a side surface of the hexagonal cross-sectional area.

5. The roller conveyor (10) according to claim 4, wherein the three straight portions are bent from a single piece of wire, wherein the middle straight portion, which along the course of the piece of wire is located between the two other lateral straight portions, is connected to the two other lateral straight portions via a circular segment-shaped arc of the piece of wire.

6. The roller conveyor (10) according to claim 5, wherein on the side of the respective lateral straight portion opposite to the middle straight portion, a support portion follows each of the lateral straight portions.

7. The roller conveyor (10) according to one of the preceding claims, wherein the frame structure (30) comprises a frame profile (31), and wherein the support recesses (33) are formed by two recesses in the frame profile (31).

8. The roller conveyor (10) according to one of the preceding claims, wherein the axle element (21) of the conveyor roller (20) extends through the axle recess (41) of the torque support (40) and the torsion-proof connection between the axle element (21) and the torque support (40) is ensured by force closure.

9. The roller conveyor (10) according to one of the preceding claims, wherein the support projections are held in the support recesses (33) by means of elastic latching connections.

10. The roller conveyor (10) according to one of the preceding claims, wherein the torque support (40) is arranged on the inner side (34) of the frame structure (30) facing toward the conveyor roller (20).

11. The roller conveyor (10) according to one of the preceding claims, wherein the torque support (40), the axle element (21), and the frame structure (30) cooperate such that the axle element (21) of the conveyor roller (20) is fixed by the torque support (40) relative to the frame structure (30) in the radial and/or axial direction(s).

12. The roller conveyor (10) according to one of the preceding claims, wherein the axle element (21) is connected to the frame structure (30) via the torque support (40) such that the axle element (21) bears against the axle bearing in an elastically biased manner in the direction of gravity.

13. A method for fixing a conveyor roller in a frame structure of a roller conveyor, comprising the followings steps:
- providing a conveyor roller (20) with at least one axle element (21) and a roller casing (23) rotatably supported around the axle element (21),
- providing a frame structure (30) with at least one axle bearing (32) and with at least one support recess (33),
- providing a torque support (40), which is formed separately from the conveyor roller (20) and the frame structure (30), with at least one support projection (42),
- fixing the torque support (40) on the axle element (21) of the conveyor roller (20) in a torsion-proof manner,
- inserting the axle element (21) of the conveyor roller (20) into the axle bearing (32) of the frame structure (30), and
- engaging the support projection (42) of the torque support (40) with the support recess (33) of the frame structure (30).

14. The method for fixing a conveyor roller (20) according to claim 13, wherein the torsion-proof fixation of the torque support (40) is performed before the insertion of the axle element (21) of the conveyor roller (20) into the axle bearing (32) of the frame structure (30), and wherein engaging the support projection (42) of the torque support (40) with the support recess (33) of the frame structure (30) is performed at the same time as the insertion of the axle element (21) of the conveyor roller (20) into the axle bearing (32) of the frame structure (30).

## Revendications

1. Transporteur à rouleaux (10) avec un rouleau de transport (20), une structure de cadre (30) et un support de couple (40),
dans lequel le rouleau de transport (20) présente au moins un élément axial (21) et une jupe de rouleau (23) logée à rotation autour de l'élément axial (21),
dans lequel la structure de cadre (30) présente au moins un palier axial (32) et au moins un évidement de support (33),
dans lequel le support de couple (40) présente un évidement axial (41) et au moins une saillie de support (42),
dans lequel l'élément axial (21) du rouleau de transport (20) est reçu dans l'évidement axial (41) du support de couple (40), et l'élément axial (21) du rouleau de transport (20) et le support de couple (40) sont reliés ensemble de manière verrouillée contre la rotation,
dans lequel l'au moins un élément axial (21) est inséré dans le palier axial (32) de la structure de cadre (30) et
dans lequel l'au moins un évidement de support (33) de la structure de cadre (30) est disposé de manière excentrique par rapport à l'axe de rotation de la jupe de rouleau (23) du rouleau de transport (20) et l'au moins une saillie de support (42) du support de couple (40) s'engrène dans l'au moins un évidement de support (33) de la structure de cadre (30).

2. Transporteur à rouleaux (10) selon la revendication 1, dans lequel l'élément axial (21) du rouleau de transport (20) s'étend à travers l'évidement axial (41) du support de couple (40), et la connexion verrouillée contre la rotation entre l'élément axial (21) et le support de couple (40) est entraînée par une conjugaison de formes entre l'élément axial (21) du rouleau de transport (20) et l'évidement axial (41) du support de couple (40) dans la direction périphérique autour de l'élément axial (21).

3. Transporteur à rouleaux (10) selon l'une quelconque des revendications 1 ou 2, dans lequel l'élément axial (21) présente une région de section transversale hexagonale et dans lequel le support de couple (40) est réalisé en tant que partie de pliage de fil, dans lequel la partie de pliage de fil présente une région de conjugaison de formes (43) correspondant à la section transversale hexagonale.

4. Transporteur à rouleaux (10) selon la revendication 3, dans lequel la partie de pliage de fil présente trois sections droites qui se situent à l'angle de 60° à chaque fois l'une par rapport à l'autre et qui reposent chacune à l'état monté sur une face latérale de la région de section transversale hexagonale.

5. Transporteur à rouleaux (10) selon la revendication 4, dans lequel les trois sections droites sont pliées à partir d'une pièce de fil unique, dans lequel la section droite centrale qui se situe le long de l'étendue de la pièce de fil entre les deux autres sections droites latérales est reliée aux deux autres sections droites latérales à chaque fois par le biais d'un arc en forme de segment de cercle de la pièce de fil.

6. Transporteur à rouleaux (10) selon la revendication 5, dans lequel une section de support se raccorde à chacune des sections droites latérales sur le côté de la section droite latérale respective détourné de la section droite centrale.

7. Transporteur à rouleaux (10) selon l'une quelconque des revendications précédentes, dans lequel la structure de cadre (30) comprend un profil de cadre (31) et dans lequel les évidements de support (33) sont formés par deux évidements dans le profil de cadre (31).

8. Transporteur à rouleaux (10) selon l'une quelconque des revendications précédentes, dans lequel l'élément axial (21) du rouleau de transport (20) s'étend à travers l'évidement axial (41) du support de couple (40), et la connexion verrouillée contre la rotation entre l'élément axial (21) et le support de couple (40) est entraînée par une adhérence.

9. Transporteur à rouleaux (10) selon l'une quelconque des revendications précédentes, dans lequel les saillies de support sont maintenues dans les évidements de support (33) au moyen d'une connexion d'encliquetage élastique.

10. Transporteur à rouleaux (10) selon l'une quelconque des revendications précédentes, dans lequel le support de couple (40) est disposé sur le côté interne (34) de la structure de cadre (30) tourné vers le rouleau de transport (20).

11. Transporteur à rouleaux (10) selon l'une quelconque des revendications précédentes, dans lequel le support de couple (40), l'élément axial (21) et la structure de cadre (30) coopèrent de telle sorte que l'élément axial (21) du rouleau de transport (20) est fixé dans la direction radiale et/ou axiale par rapport à la structure de cadre (30) à travers le support de couple (40).

12. Transporteur à rouleaux (10) selon l'une quelconque des revendications précédentes, dans lequel l'élément axial (21) est relié à la structure de cadre (30) par le biais du support de couple (40) de telle sorte que l'élément axial (21) repose de manière précontrainte élastiquement en direction de la force de gravité dans le palier axial.

13. Procédé de fixation d'un rouleau de transport (20) dans une structure de cadre (30) d'un transporteur à rouleaux (10) comprenant les étapes suivantes :
- mise à disposition d'un rouleau de transport (20) avec au moins un élément axial (21) et une jupe de rouleau (23) logée à rotation autour de l'élément axial (21),
- mise à disposition d'une structure de cadre (30) avec au moins un palier axial (32) et avec au moins un évidement de support (33),
- mise à disposition d'un support de couple (40) réalisé séparément du rouleau de transport (20) et de la structure de cadre (30) avec au moins une saillie de support (42),
- fixation verrouillée contre la rotation du support de couple (40) à l'élément axial (21) du rouleau de transport (20),
- insertion de l'élément axial (21) du rouleau de transport (20) dans le palier axial (32) de la structure de cadre (30), et
- engrènement de la saillie de support (42) du support de couple (40) avec l'évidement de support (33) de la structure de cadre (30).

14. Procédé de fixation d'un rouleau de transport (20) selon la revendication 13, dans lequel la fixation verrouillée contre la rotation du support de couple (40) a lieu avant l'insertion de l'élément axial (21) du rouleau de transport (20) dans le palier axial (32) de la structure de cadre (30) et dans lequel l'engrènement de la saillie de support (42) du support de couple (40) avec l'évidement de support (33) de la structure de cadre (30) a lieu simultanément à l'insertion de l'élément axial (21) du rouleau de transport (20) dans le palier axial (32) de la structure de cadre (30).
